(19) Europäisches Patentamt
European Patent Office
Office européen des brevets

(11) EP 1 561 541 B1

(12) **EUROPEAN PATENT SPECIFICATION**

(45) Date of publication and mention of the grant of the patent:
**30.04.2008 Bulletin 2008/18**

(51) Int Cl.:
***B24B 37/04*** *(2006.01)* ***B24D 13/14*** *(2006.01)*
***B24D 18/00*** *(2006.01)*

(21) Application number: **05002400.9**

(22) Date of filing: **04.02.2005**

(54) **Chemical mechanical polishing pad and polishing process**

Chemisch-mechanisches Polierkissen und Polierverfahren

Tampon à polir et procédé de polissage chimico-mécanique

(84) Designated Contracting States:
**DE FR IT**

(30) Priority: **05.02.2004 JP 2004029393**
**11.06.2004 JP 2004173410**
**23.07.2004 JP 2004215931**

(43) Date of publication of application:
**10.08.2005 Bulletin 2005/32**

(73) Proprietor: **JSR Corporation**
**Tokyo 104-0045 (JP)**

(72) Inventors:
- **Okamoto, Takahiro**
  **Tokyo 104-0045 (JP)**
- **Miyauchi, Hiroyuki**
  **Tokyo 104-0045 (JP)**
- **Kawahara, Kouji**
  **Tokyo 104-0045 (JP)**
- **Shiho, Hiroshi**
  **Tokyo 104-0045 (JP)**
- **Hasegawa, Kou**
  **Tokyo 104-0045 (JP)**
- **Kawahashi, Nobuo**
  **Tokyo 104-0045 (JP)**

(74) Representative: **TBK-Patent**
**Bavariaring 4-6**
**80336 München (DE)**

(56) References cited:
**EP-A- 1 164 559** **EP-A- 1 252 973**
**EP-A- 1 295 680** **EP-A- 1 470 893**
**US-B1- 6 234 875** **US-B1- 6 354 915**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

Field of the Invention

The present invention relates to a chemical mechanical polishing pad, a production method thereof, and a chemical mechanical polishing process.

Description of the Prior Art

In production of semiconductor devices, chemical mechanical polishing (CMP) has been drawing attention as a polishing method capable of forming a surface with excellent flatness. The chemical mechanical polishing is a technique comprising polishing an object to be polished by sliding a polishing pad on a surface to be polished of the object with a water-based dispersion for chemical mechanical polishing (water-based dispersion in which polishing particles are dispersed) fed down on a surface of the chemical mechanical polishing pad. It is known that in this chemical mechanical polishing, the result of polishing is greatly affected by the properties and characteristics of the polishing pad.

Conventionally, in the chemical mechanical polishing, a polyurethane foam containing fine air bubbles is used as the polishing pad, and polishing is carried out with slurry kept in pores open on a surface of the resin. It is known that the polishing rate and the result of polishing are improved by forming grooves on the surface (polishing surface) of the chemical mechanical polishing pad (refer to JP-A 11-70463 (the term "JP-A" as used herein means an "unexamined published Japanese patent application"), JP-A 8-216029 and JP-A 8-39423).

However, since it is very difficult to control foaming freely when the polyurethane foam is used as a material of the chemical mechanical polishing pad, there are problems that the quality of the pad varies and that the polishing rate and the quality of processing vary. In particular, surface defects like scratches (hereinafter referred to as "scratches") may occur, and an improvement in the surface condition of the polyurethane pad is desired accordingly. Further, since the polyurethane generally has poor water resistance, it has a problem with respect to the useful life of the pad.

In recent years, as a chemical mechanical polishing pad in which pores can be formed without use of a foam, a polishing pad having a water-soluble polymer dispersed in a matrix resin are disclosed (refer to JP-A 8-500622, JP-A 2000-34416, JP-A 2000-33552 and JP-A 2001-334455).

According to this technique, pores are formed when the water-soluble polymer dispersed in the matrix resin makes contact with a water-based dispersion for chemical mechanical polishing or water and dissolves at the time of polishing.

This technique has an advantage that the dispersion state of pores can be controlled freely, whereby an improvement in the condition of a surface to be polished is being achieved to a significant degree. Further, it is known that an effect of improving the useful life of the pad can also be obtained by using an elastomer having excellent water resistance as the matrix resin.

Meanwhile, in recent years, shallow trench isolation, a so-called STI technique, has been studied for the purpose of miniaturization of a semiconductor device. This technique comprises forming trenches on a silicon substrate, depositing an insulation film material and removing an excessive insulation film by a chemical mechanical polishing step. In the STI technique, a primary object to be polished in the chemical mechanical polishing step is an insulation film. It has been reported that in the STI, a polished surface having few surface defects can be obtained quickly by carrying out chemical mechanical polishing by use of a water-based dispersion for chemical mechanical polishing which contains cerium oxide as main polishing particles (refer to JP-A 2003-209076 and JP-A 2002-190458).

However, when a polishing pad having a water-soluble polymer dispersed in a matrix resin, i.e., a polishing pad having an advantage of long useful life, is used in polishing an insulation film by use of the water-based dispersion for chemical mechanical polishing which contains cerium oxide as main polishing particles, there arises such a problem as an insufficient polishing rate.

No chemical mechanical polishing pads which can be suitably applied to the STI technique, can provide a good polished surface at a high polishing rate in polishing an insulation film with a water-based dispersion for chemical mechanical polishing which contains cerium oxide as main polishing particles and have a satisfactory useful life have been proposed.

EP-A-1 295 680 describes a polishing pad which comprises a supporting layer, which is a non-porous elastic body, and a polishing layer, which is laminated on one surface of the supporting layer. The Shore D hardness of the polishing layer can be 35 or more, and the hardness of the supporting layer can be lower than that of the polishing layer.

In EP-A-1 470 893, a polishing pad is disclosed, which comprises 70 to 99.9 mass% of a crosslinked diene elastomer and 0.1 to 30 mass% of a polymer having an acid anhydride structure based on 100 mass% of the total of the two components and which has a specific gravity of 0.9 to 1.2.

EP-A-1 252 973 is concerned with a polishing pad which comprises a water-insoluble matrix material such as crosslinked 1,2-polybutadiene, and a water-soluble particle such as beta-cyclodextrin dispersed in this water-insoluble

matrix material.

EP-A-1 164 559 relates to a composition for a polishing pad, which comprises a water-insoluble matrix material containing a crosslinked polymer and a water-soluble particle dispersed in the water-insoluble matrix material. The elongation remaining after breaking is 100% or smaller when a test piece comprising the water-insoluble matrix material is broken at 80°C according to JIS K 6251.

US-B-6,234,875 discloses a method of modifying a surface with (a) contacting the surface to be modified with a working surface of an abrasive article, which comprises a phase separated polymer having a first and a second phase, the first phase being harder than the second phase; and (b) relatively moving the surface to be modified and the fixed abrasive article to remove material from the surface to be modified in the absence of an abrasive slurry.

SUMMARY OF THE INVENTION

An object of the present invention is to provide a chemical mechanical polishing pad which can be suitably applied to polishing of metal film and insulation film, particularly to an STI technique, provides a flat polished surface, can provide a high polishing rate and has a satisfactory useful life.

Another object of the invention is to provide a method for producing the chemical mechanical polishing pad of the present invention.

Still another object of the present invention is to provide a chemical mechanical polishing process using the chemical mechanical polishing pad of the present invention.

Other objects and advantages of the present invention will become apparent from the following description.

According to the present invention, firstly, the above objects and advantages of the present invention are achieved by a chemical mechanical polishing pad comprising a water-insoluble matrix which comprises (A) a styrene polymer and (B) a diene polymer, wherein one of the components (A) and (B) is dispersed in the other component to form a sea-island structure of the water-insoluble matrix, wherein the average size of the domain forming the islands ranges from 0.2 to 30 μm.

According to the present invention, secondly, the above objects and advantages of the present invention are achieved by a chemical mechanical polishing process which comprises polishing a surface to be polished of an object to be polished by use of the chemical mechanical polishing pad of the present invention.

DETAILED DESCRIPTION OF THE PREFERRED EMBODIMENTS

Chemical Mechanical Polishing Pad

The chemical mechanical polishing pad of the present invention comprises a water-insoluble matrix comprising (A) a styrene polymer and (B) a diene polymer with the above described structure.

(A) Styrene Polymer

The styrene polymer (A) may be a polystyrene of a styrene homopolymer or a styrene copolymer.

The above styrene copolymer may be a copolymer of styrene and other monomer copolymerizable with styrene. Illustrative examples of other monomer copolymerizable with styrene include an aliphatic conjugated diene compound, an unsaturated carboxylic acid ester compound, and a vinyl cyanide compound.

Specific examples of the aliphatic conjugated diene compound include 1,3-butadiene, isoprene, and chloroprene.

Specific examples of the above unsaturated carboxylic acid ester compound include methyl (meth)acrylate, ethyl (meth)acrylate, n-propyl (meth)acrylate, i-propyl (meth)acrylate, cyclohexyl (meth)acrylate, phenyl (meth)acrylate, 2-methoxyethyl (meth)acrylate, and methoxy diethylene glycol (meth)acrylate.

Specific examples of the above vinyl cyanide compound include (meth)acrylonitrile, α-chloroacrylonitrlle, and vinylidene cyanide.

Specific examples of the styrene copolymer include a styrene/1,3-butadiene copolymer, a styrene/isoprene copolymer, a styrene/acrylonitrile copolymer, a styrene/methyl methacrylate copolymer, and a styrene/1,3-butadiene/acrylonitrile copolymer. These may be a random copolymer or a block copolymer. In the case of the block copolymer, they may be any type typified by an A-B type, A-B-A type or multi-block type. Further, when hydrogenatable carbon-carbon double bonds are contained in the copolymer, all or some of the double bonds may be contained in a hydrogenated state.

The content of styrene in the styrene copolymer is preferably not lower than 10 wt%, more preferably not lower than 20 wt%. When the content of styrene is lower than 10 wt%, a sufficient polishing rate may not be obtained in the chemical mechanical polishing step.

The melt flow rate (in conformity with ISO1133, 200° C, 5 kgf) of the polystyrene or styrene copolymer is preferably 10 to 20 g/10min, more preferably 12 to 18 g/10 min. By use of a polystyrene or styrene copolymer showing a melt flow rate of this range, a chemical mechanical polishing pad which exhibits good polishing performance can be obtained.

(B) Diene Polymer

A composition for the chemical mechanical polishing pad of the present invention contains (B) a diene polymer (which is different from the styrene polymer (A)).

Illustrative examples of the diene polymer include a 1,3-butadiene polymer, and an isoprene polymer.

The above 1,3-butadiene polymer is a 1,3-butadiene homopolymer or a 1,3-butadiene copolymer. The 1, 3-butadiene copolymer is a copolymer of 1,3-butadiene and other monomer copolymerizable with 1,3-butadiene. Illustrative examples of other monomer copolymerizable with 1,3-butadiene include an unsaturated carboxylic acid ester compound, and a vinyl cyanide compound.

Specific examples of the above unsaturated carboxylic acid ester compound and vinyl cyanide compound include those enumerated for the unsaturated carboxylic acid ester compound and vinyl cyanide compound described above as other monomers copolymerizable with styrene.

Specific examples of the above unsaturated carboxylic acid ester compound include methyl (meth)acrylate, ethyl (meth)acrylate, n-propyl (meth)acrylate, i-propyl (meth)acrylate, cyclohexyl (meth)acrylate, phenyl (meth)acrylate, 2-methoxyethyl (meth)acrylate, and methoxy diethylene glycol (meth)acrylate.

Specific examples of the above vinyl cyanide compound include (meth)acrylonitrile, $\alpha$-chloroacrylonitrile, and vinylidene cyanide.

Specific examples of the above 1,3-butadiene homopolymer include butadiene rubber, and 1,2-polybutadiene rubber.

Specific examples of the above 1,3-butadiene copolymer include butadiene acrylonitrile rubber, and butadiene methyl methacrylate rubber.

Specific examples of the above isoprene polymer include isoprene rubber, and natural rubber.

The diene polymer (B) used in the present invention is preferably a 1,3-butadiene polymer, more preferably a 1,2-polybutadiene. The 1,2-bond content in the 1,2-polybutadiene may be any appropriate value but is preferably not lower than 80%, more preferably not lower than 85%, particularly preferably 90 to 95%, from the viewpoints of processability in production of the chemical mechanical polishing pad and provision of proper hardness to the chemical mechanical polishing pad to be obtained.

The diene polymer (B) is used in an amount of preferably 30 to 95 parts by weight, more preferably 50 to 90 parts by weight, particularly preferably 60 to 80 parts by weight, when the total of the styrene polymer (A) and the diene polymer (B) is 100 parts by weight.

In addition to the above components (A) and (B), the chemical mechanical polishing pad of the present invention can contain (D) a polymer having an acid anhydride group, a water-soluble material, and other compounding agents as required.

(D) Polymer Having Acid Anhydride Group

The polymer having an acid anhydride group (D) which can be used as a raw material of the chemical mechanical polishing pad of the present invention is a polymer having an acid anhydride group represented by the following formula (1).

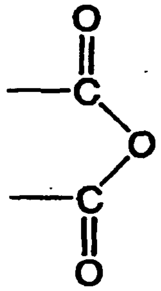

... (1)

The polymer (D) is not particularly limited as long as it has the group represented by the above formula (1). For example, the polymer (D) may be any of (1) a polymer having an acid anhydride group in the main chain, (2) a

polymer having an acid anhydride group not in the main chain but only in the side chain, and (3) a polymer having an acid anhydride group in both the main chain and the side chain.

The above polymer (1) having an acid anhydride group in the main chain can be obtained as, for example, a polymer of a monomer having an acid anhydride group or a copolymer of a monomer having an acid anhydride group and a monomer having no acid anhydride group.

Illustrative examples of the above monomer having an acid anhydride group include maleic anhydride, itaconic anhydride, citraconic anhydride, and endomethylene tetrahydrophthalic anhydride. Illustrative examples of the above monomer having no acid anhydride group include a conjugated diene compound, an aromatic monomer, and a (meth) acrylic ester compound.

Specific examples of the conjugated diene compound include 1,3-butadiene, isoprene, 2,3-dimethyl-1,3-butadiene, and chloroprene. Specific examples of the aromatic monomer include styrene, α-methyl styrene, o-hydroxy styrene, m-hydroxy styrene, and p-hydroxy styrene. Specific examples of the (meth)acrylic ester compound include methyl (meth)acrylate, ethyl (meth)acrylate, 2-hydroxymethyl (meth)acrylate, 3-hydroxypropyl (meth)acrylate, dimethylaminomethyl (meth)acrylate, and dimethylaminoethyl (meth)acrylate.

The above polymer (2) having an acid anhydride group not in the main chain but only in the side chain can be obtained by modifying a polymer having no acid anhydride group in the main chain by a monomer having an acid anhydride group. The polymer can be "modified" by, for example, a method comprising heating a polymer having no acid anhydride group in the main chain in the presence of a monomer having an acid anhydride group and a peroxide (e.g., hydrogen peroxide, organic peroxide, etc.) so as to add a side chain having an acid anhydride group to the polymer having no acid anhydride group in the main chain or a method comprising heating a polymer having no acid anhydride group in the main chain in the presence of a compound having at least two acid anhydride groups in the molecule and/or a compound having an acid anhydride group and a carboxyl group in the molecule and a catalyst (i.e., acid, alkali or metal catalyst) so as to add a side chain having an acid anhydride group to the polymer having no acid anhydride group in the main chain.

Illustrative examples of the above polymer having no acid anhydride group in the main chain include a polyolefin, a diene based (co)polymer, a hydrogenated diene based (co)polymer, and a (meth)acrylic ester based polymer. Specific examples of the above polyolefin include a polyethylene, a polypropylene, a polybutene, an ethylene/propylene copolymer, and an ethylene/butene copolymer.

Specific examples of the above diene based (co)polymer include butadiene rubber, 1, 2-polybutadiene, a styrene/butadiene copolymer, and isoprene rubber.

Further, specific examples of the above (meth)acrylic ester based polymer include a homopolymer or copolymer of (meth)acrylic ester. Specific examples of the above (meth)acrylic ester include methyl (meth)acrylate. γ-(meth)acryloxypropyl(dimethoxy)methyl silane, γ-oxypropyltrimethoxy (meth)acrylate, glycidyl (meth)acrylate, 2-hydroxymethyl (meth)acrylate, 3-hydroxypropyl (meth)acrylate, dimethylaminomethyl (meth)acrylate, and dimethylaminoethyl (meth) acrylate.

Meanwhile, illustrative examples of the above monomer having an acid anhydride group include those enumerated as examples of the monomer having an acid anhydride group which is used for synthesizing the above polymer (1) having an acid anhydride group in the main chain.

Illustrative examples of the above compound having at least two acid anhydride groups in the molecule include pyromellitic anhydride and 3,3',4,4'-benzophenonetetracarboxylic dianhydride. Illustrative examples of the above compound having an acid anhydride group and a carboxyl group in the molecule include trimellitic anhydride.

The above polymer (3) having an acid anhydride group in both the main chain and the side chain can be obtained by modifying the above polymer (1) having an acid anhydride group in the main chain by a monomer having an acid anhydride group. In this case, the polymer can be "modified" in the same manner as in the above (2).

Of these, the polymer (2) having an acid anhydride group not in the main chain but only in the side chain is preferably used, a polymer resulting from modifying a polyolefin or hydrogenated diene based (co)polymer with dicarboxylic anhydride having a carbon-carbon double bond is more preferably used, and a maleic anhydride modified polyethylene, a maleic anhydride modified polypropylene and a maleic anhydride modified styrene/butadiene copolymer are particularly preferred.

A preferred acid value (amount of potassium hydroxide required to neutralize free fatty acid contained in 1 g of polymer) of the polymer (D) having an acid anhydride group is preferably 0.1 to 500 mg-KOH/g, more preferably 0.5 to 400 mg-KOH/g. particularly preferably 1 to 300 mg-KOH/g. By use of a polymer (D) having an acid anhydride group which shows an acid value of this range, a polishing pad with an excellent balance between a polishing rate and moisture resistance can be obtained.

To determine the acid value under this acid value measuring conditions, the acid anhydride group is also ring-opened and measured as an acid

The content of the polymer (D) having an acid anhydride group may be not higher than 30 parts by weight, more suitably 5 to 20 parts by weight, when the total amount of the styrene polymer (A) and the diene polymer (B) is

100 parts by weight. With the content of the polymer (D) within the above range, a chemical mechanical polishing pad having good polishing performance is obtained.

The water-insoluble matrix of the chemical mechanical polishing pad of the present invention comprises the above component (A), the above component (B), and as required, the above component (D). The water-insoluble matrix preferably has a sea-island structure that at least one of the above components forms a continuous phase (so-called "sea") and other components are dispersed as "islands" having an average domain size of 0.2 to 30 μm. The average domain size is preferably 0.2 to 20 μm, more preferably 0.2 to 10 μm. The average domain size is the average of the maximum lengths of domains forming the "islands" in the continuous phase. When the water-insoluble matrix has a sea-island structure with an average domain size of the above range, there can be obtained a chemical mechanical polishing pad which is excellent in a polishing rate, strength and durability and provides a polished surface having excellent flatness.

The shape of the domain is preferably, for example, spherical, rugby-ball-shaped or the like. Further, the domain may take a shape resulting from bonding the above shapes together.

The average domain size can be determined by a transmission electron microscope or the like. More specifically, it can be known by slicing the polishing pad by a microtome or the like, observing the slice under the transmission electron microscope and calculating the average of the maximum length of each domain existing in the observed area. The thickness of the slice may be preferably about 50 to 200 nm, more preferably about 100 nm, and the magnification of the electron microscope is preferably 1,500 to 10,000, more preferably 1,500 to 5,000.

When the content of the component (B) is higher than 40 wt% based on the total amount of the components (A) and (B) or the components (A), (B) and (D), the component (B) is liable to form the continuous phase. In this case, the component (A) and/or the component (D) form(s) the islands. Meanwhile, when the content of the component (B) is lower than 30 wt% based on the total amount of the components (A) and (B) or the components (A), (B) and (D), the component (A) is liable to form the continuous phase, and the component (B) and/or the component (D) form(s) the islands. Meanwhile, when the content of the component (B) is 30 to 40 wt% based on the total amount of the components (A) and (B) or the components (A), (B) and (D), it is determined according to the types of the components (A) and (B) to be used which of the components (A) and (B) forms the continuous phase.

With the above recommended amount, the component (D) tends to form not the continuous phase but the islands.

(E) Water-Soluble Material

The water-soluble material is dispersed in a granular form in the water-insoluble matrix comprising the above components (A) and (B).

Hereinafter, the water-soluble material may be referred to as "water-soluble particles" since it is dispersed in a granular form.

In addition to an effect of forming pores, the water-soluble particles have an effect of increasing the hardness of the chemical mechanical polishing pad. Thereby, pressure which can be applied to an object to be polished can be increased, and a polishing rate can also be improved. In addition, excellent polishing flatness can be obtained. Therefore, the water-soluble particles are particularly preferably solids which can secure satisfactory hardness of the polishing pad.

The water-soluble particles are particles having a function of leaving the chemical mechanical polishing pad upon contacting with the water-based dispersion for chemical mechanical polishing in the chemical mechanical polishing pad and forming pores in the vicinity of the surface of the pad. The particles may leave the pad by dissolving as a result of contacting with water contained in the water-based dispersion or the like or by swelling and gelling as a result of absorbing the water or the like. Further, what causes the dissolution or swelling is not limited to water, and the dissolution or swelling may occur upon contacting with a water-based mixed medium containing an alcohol solvent such as methanol.

Illustrative examples of the water-soluble material include an organic water-soluble material and an inorganic water-soluble material. Specific examples of the organic water-soluble material include dextrin, cyclodextrin, mannite, saccharides (lactose and the like), celluloses (hydroxypropylcellulose, methylcellulose and the like), starch, proteins, polyvinyl alcohol, polyvinylpyrrolidone, polyacrylic acid, polyethylene oxide, water-soluble photosensitive resins, sulfonated polyisoprene, and a sulfonated polyisoprene copolymer. Specific examples of the inorganic water-soluble material include potassium acetate, potassium nitrate, potassium carbonate, potassium hydrogen carbonate, potassium chloride, potassium bromide, potassium phosphate, and magnesium nitrate.

Of these, the organic water-soluble material is preferably used, and cyclodextrin can be particularly preferably used.

The above material of these water-soluble materials can be used alone or in combination of two or more. Further, the water-soluble material may be water-soluble particles comprising a given material or may be water-soluble particles comprising two or more different materials.

The average particle diameter of the water-soluble particles is preferably 0.1 to 500 μm, more preferably 0.5 to 100 μm. By use of water-soluble particles having particle diameters of this range, a chemical mechanical polishing

pad with an excellent balance between the capability of the pores formed in the vicinity of the surface of the pad to retain the water-based dispersion for chemical mechanical polishing and the mechanical strength of the pad is obtained.

The water-soluble particles are used in an amount of preferably not larger than 50 parts by weight, more preferably not larger than 40 parts by weight, much more preferably 0.5 to 40 parts by weight, particularly preferably 5 to 30 parts by weight, when the total of the amounts of the styrene polymer (A), the diene polymer (B) and the optionally used polymer (D) having an acid anhydride group is 100 parts by weight.

Further, the content of the water-soluble particles is preferably not higher than 90 vol%, more preferably 0.1 to 90 vol%, much more preferably 0.1 to 60 vol%, particularly preferably 0.5 to 40 vol%, based on the total volume of the chemical mechanical polishing pad of the present invention.

With the amount and content of the water-soluble particles within the above ranges, a chemical mechanical polishing pad which exhibits good polishing performance is obtained.

The water-soluble particles preferably dissolve in water only when exposed to the surface of the polishing pad and do not dissolve in water, absorb moisture or swell when existing in the polishing pad. For this purpose, the water-soluble particles can have an outer shell which inhibits moisture absorption in at least a part of the outermost portion. This outer shell may be physically adsorbed to the water-soluble particles or chemically bonded to the water-soluble particles or attached to the water-soluble particles by both of the physical adsorption and the chemical bonding. Illustrative examples of a material which forms such an outer shell include an epoxy resin, a polyimide, a polyamide, and a polysilicate. Even when the outer shell is formed in only a portion of the water-soluble particle, the above effect can be attained sufficiently.

Other Compounding Agents

The chemical mechanical polishing pad of the present invention may also contain various additives such as a filler, a softener, an antioxidant, an ultraviolet absorber, an antistatic agent, a lubricant and a plasticizer as required.

The shape of the chemical mechanical polishing pad of the present invention is not particularly limited and may be a disk-shaped, polygonal or the like, for example. It can be selected as appropriate according to a polishing machine used with the chemical mechanical polishing pad of the present invention attached thereto.

The size of the chemical mechanical polishing pad is also not particularly limited. In the case of a disk-shaped pad, the diameter may be 150 to 1,200 mm, particularly 500 to 800 mm, and the thickness may be 1.0 to 5.0 mm, particularly 1.5 to 3.0 mm.

The chemical mechanical polishing pad of the present invention may have grooves or hollows of any pattern on the polishing surface as required. Illustrative examples of the pattern of the grooves include concentric grooves, lattice grooves, a spiral groove, and radial grooves. As for the hollows, a number of circular or polygonal hollows may be provided on the polishing surface.

The Shore D hardness of the chemical mechanical polishing pad of the present invention is preferably 35 to 100, more preferably 50 to 90, much more preferably 60 to 85. With such hardness, a chemical mechanical polishing pad which provides a satisfactory polishing rate and a polished surface having a good surface condition can be obtained.

The chemical mechanical polishing pad of the present invention may be a multilayer pad which has a supporting layer on the non-polishing surface side of the above pad.

The above supporting layer is a layer which supports the chemical mechanical polishing pad from the backside of the polishing surface. Although the characteristics of the supporting layer are not particularly limited, the supporting layer is preferably softer than the pad. With the softer supporting layer, it can be prevented that the pad comes off or the surface of the polishing layer is bent at the time of polishing, thereby allowing stable polishing, even when the thickness of the pad is small, e.g., 1.0 mm or smaller. The hardness of the supporting layer is preferably not higher than 90%, more preferably 50 to 90%, particularly preferably 50 to 80% of the hardness of the pad. A hardness of 50 to 70% is especially preferred.

Further, the planar shape of the supporting layer is not particularly limited and may be the same as or different from that of the polishing layer. The planar shape of the supporting layer may be circular, polygonal (tetragonal and the like) or the like, for example. Further, its thickness is also not particularly limited but may be preferably 0.1 to 5 mm, more preferably 0.5 to 2 mm, for example.

A material which forms the supporting layer is not particularly limited. However, an organic material is preferably used since it can be molded into a given shape and characteristic easily and it can provide moderate elasticity or the like. As the organic material, a thermoplastic resin, a thermosetting resin, an elastomer, rubber and the like may be used alone or in combination. Preferably, a polyurethane, a polyolefin and the like can be used in addition to the above styrene polymer (A) and the diene polymer (B).

The above chemical mechanical polishing pad of the present invention has characteristics that it produces a flat polished surface, can provide a high polishing rate and has a satisfactory useful life.

Production of Chemical Mechanical Polishing Pad (outside the scope of the invention, but useful for its understanding)

As described above, the chemical mechanical polishing pad of the present invention can be produced by preparing a composition comprising (A) a styrene polymer, (B) a diene polymer and (C) a crosslinking agent, shaping the above composition into a predetermined shape, and heating the composition during or after shaping to cure it

Illustrative examples of the above crosslinking agent (C) contained in the above composition include an organic peroxide, hydrogen peroxide and sulfur.

As such a crosslinking agent, the organic peroxide is preferably used because it is easy to handle and causes no contamination in the chemical mechanical polishing step. Specific examples of the organic peroxide Include dicumyl peroxide, diethyl peroxide, di-t-butyl peroxide, diacetyl peroxide, and diacyl peroxide.

The crosslinking agent is preferably used in an amount of 0.01 to 0.5 parts by weight based on 100 parts by weight of the diene polymer (B).

A method for preparing the above composition is not particularly limited. The composition can be prepared by kneading a predetermined material by a mixer or the like, for example. As the mixer, a known mixer can be employed. Illustrative examples of the known mixer include a roll, a kneader, a Banbury mixer and an extruder (single-screw, multi-screw).

The composition is kneaded under heating to facilitate processing. When the above composition contains the water-soluble particles (E), the water-soluble particles (E) are preferably solid at the temperature during kneading. By kneading the composition with the water-soluble particles (E) in a solid form, the water-soluble particles (E) can be dispersed with the above preferred average particle retained. Therefore, it is preferred to select the type of the water-soluble particles (E) according to the processing temperature of a material to be used.

The above composition preferably shows a torque of 0.05 to 0.50 N·m after strain is applied for 18 minutes under the following conditions by a vibratory vulcanization tester in accordance with JIS K6300-2.
measurement temperature: 170°C
pressure: 490 kPa
amplitude angle: ±1°
frequency of torsion: 100 cpm

The above torque is preferably 0.10 to 0.50 N·m.

In the above description, "cpm" indicates "Cycles Per Minute".

By use of a composition showing a torque value of this range, a chemical mechanical polishing pad having a high polishing rate can be produced.

In the above production method, the above composition is then shaped into a predetermined shape. Further, the composition is heated during or after the shaping to cure the shaped composition.

The heating temperature is, for example, 120 to 200°C, preferably 150 to 190°C, and the heating time is, for example, 1 to 30 minutes, preferably 2 to 20 minutes.

When the chemical mechanical polishing pad of the present invention has grooves or hollows, the grooves or hollows may be formed by cutting or the like after the pad is molded into a desired shape. Alternatively, the shapes of the grooves or hollows can be formed concurrently with the shape of the pad by molding the above composition by use of a mold having the shapes of the grooves or hollows.

Chemical Mechanical Polishing Process

The chemical mechanical polishing pad of the present invention can be attached to a commercially available polishing instrument and used for chemical mechanical polishing in accordance with a method known per se.

In that case, the types of object to be polished and water-based dispersion for chemical mechanical polishing to be used are not particularly limited. The chemical mechanical polishing pad of the present invention can be suitably used particularly when an insulation film is polished in the STI step by use of a water-based dispersion for chemical mechanical polishing which contains cerium oxide (ceria) as main polishing particles and when an interlayer insulation film of a multilayer wiring substrate is polished by use of a water-based dispersion for chemical mechanical polishing which contains ceria or silicon oxide (silica) as main polishing particles.

Illustrative examples of a material constituting the insulation film which is a surface to be polished in the above STI step and a material constituting the insulation film of the multilayer wiring substrate include a thermally oxidized film, a PETEOS film (Plasma Enhanced-TEOS film), an HDP film (High Density Plasma Enhanced-TEOS film), and a silicon oxide film obtained by a thermal CVD method.

The above thermally oxidized film is formed by exposing high-temperature silicon to an oxidizing atmosphere to chemically react silicon with oxygen or water.

The above PETEOS film is formed by chemical vapor deposition using tetraethyl orthosilicate (TEOS) as a raw material and plasma as an accelerating condition.

The above HDP film is formed by chemical vapor deposition using tetraethyl orthosilicate (TEOS) as a raw material and high-density plasma as an accelerating condition.

The above silicon oxide film obtained by a thermal CVD method is formed by an atmospheric pressure CVD method (AP-CVD method) or a low pressure CVD method (LP-CVD method).

The above boron phosphorus silicate film (BPSG film) is formed by an atmospheric pressure CVD method (AP-CVD method) or a low pressure CVD method (LP-CVD method).

Further, the above insulation film called FSG is formed by chemical vapor deposition using high-density plasma as an accelerating condition.

Examples

Hereinafter, the present invention will be further described with reference to Examples.

Example 1

(1) Preparation of Composition for Chemical Mechanical Polishing Pad

20 parts by weight of polystyrene (product of PS Japan KK, trade name "HF55") as a component (A), 70 parts by weight of 1,2-polybutadiene (product of JSR Corporation, trade name "JSR RB830") as a component (B), 10 parts by weight of maleic anhydride modified polypropylene (product of Sanyo Chemical Industries. Ltd., trade name "UMEX 1010", acid value: 52 mg-KOH/g) as a component (D) and 16.6 parts by weight of β-cyclodextrin (product of BIO RESEARCH CORPORATION OF YOKOHAMA, trade name "DEXYPAL β-100") as a component (E) were kneaded in an extruder heated to 120°C, at 150°C and 120 rpm. Then, 0.8 parts by weight (corresponding to 0.32 parts by weight in terms of pure dicumyl peroxide) of dicumyl peroxide (product of NOF CORPORATION, trade name "PERCUMYL D40", containing 40 wt% of dicumyl peroxide) as a component (C) was added, and the resulting mixture was further kneaded at 120° C and 60 rpm to obtain a composition for chemical mechanical polishing pad.

(2) Measurement of Curing Torque of Composition

Then, the curing torque of the composition obtained in the above (1) was measured.

"Curelastometer WP" of JSR Trading Co., Ltd. was used. After a die was heated to 170°C, 4 g of the composition obtained in the above (1) was set in the die. Then, the die was closed, and torque after strain was applied for 18 minutes at a temperature of 170°C, a pressure of 490 kPa, an amplitude angle of ±1° and a frequency of torsion of 100 cpm was measured. The torque was 0.25 N·m.

(3) Production of Chemical Mechanical Polishing Pad

The composition obtained in the above (1) was set in a mold for molding a pad and heated at 170°C for 18 minutes to obtain a molded article having a diameter of 60 cm and a thickness of 2.8 mm. Then, on one surface of the molded article, concentric grooves having a groove width of 0.5 mm, a pitch of 2 mm and a groove depth of 1.4 mm were formed by use of a cutting machine of Kato Kikai Co., Ltd., thereby producing a chemical mechanical polishing pad.

The components (A) and (D) contained in the produced chemical mechanical polishing pad were dispersed in the component (B), the average domain size of the component (A) was 0.9 μm, and the average domain size of the component (D) was 0.3 μm. Further, the average particle diameter of β-cyclodextrin (E) contained in the produced chemical mechanical polishing pad was 15 μm, and the volume percentage of β-cyclodextrin in the whole pad was 10 vol%. The above average domain size was determined by sampling a slice having a thickness of 100 nm from the polishing pad by a microtome, taking a transmission electron photomicrograph thereof, and then measuring the average of the maximum length of each domain.

(4) Evaluation of Chemical Mechanical Polishing Performance

(a) Evaluation of Polishing of Insulation Film Using Water-Based Dispersion Containing Ceria as Main Polishing Particles:

(1) Evaluation of Polishing Rate

The above produced chemical mechanical polishing pad was attached to a chemical mechanical polishing instrument (model "LAPMASTER LGP510", product of SFT Co., Ltd.), and chemical mechanical polishing was conducted under the following conditions by use of an 8-inch PETEOS-film-attached wafer as a material to be polished.

water-based dispersion for chemical mechanical
polishing: water-based dispersion containing 1 wt% of ceria and 1 wt% of ammonium polyacrylate
feed rate of water-based dispersion for chemical mechanical polishing: 100 mL/min
pressure of head: 400 g/cm$^2$
number of revolutions of platen: 50 rpm
number of revolutions of head: 70 rpm
polishing time: 60 seconds

On the 8-inch PETEOS-film-attached wafer which was a material to be polished, 21 points were marked equally in the diameter direction except for 5 mm from the circumference, and for these specific points, a polishing rate at each point was calculated from the difference in the thickness of the PETEOS film between before and after polishing and the polishing time, and the average thereof was taken as a polishing rate. The result is shown in Table 3.

(ii) Evaluation of In-plane Uniformity of Polished Amount

The in-plane uniformity of polished amount was calculated by the following calculation formula for the difference (this value will be referred to as "polished amount") in thickness between before and after polishing at the above 21 specific points. The result is shown in Table 3. The thickness of the PETEOS film at each point was measured by an optical film thickness meter.

$$\text{In-plane Uniformity of Polished Amount} = (\text{Standard Deviation of Polished Amount}/\text{Average of Polished Amount}) \times 100\ (\%)$$

(iii) Evaluation of Useful Life of Chemical Mechanical Polishing Pad

8-inch PETEOS-film-attached wafers were successively subjected to chemical mechanical polishing under the above polishing conditions. Each time a wafer was polished, 10-second interval dressing was carried out by a dresser using 100-mesh diamond while ion exchanged water was fed at a rate of 100 mL/min.

A polishing rate was calculated for each 50 polished wafers, and a time point when a polishing rate which was lower than the average of the previous polishing rates by at least 15% was recorded twice in a row was taken as the useful life of the chemical mechanical polishing pad. The result is shown in Table 3.

(b) Evaluation of Polishing of Interlayer Insulation Film Using Water-Based Dispersion for Chemical Mechanical Polishing Containing Silica as Main Polishing Particles:

(i) Evaluation of Polishing Rate

The above produced chemical mechanical polishing pad was attached to a chemical mechanical polishing instrument (model "EP0112", product of Ebara Corporation), and polishing was conducted under the following conditions by use of an 8-inch PETEOS-film-attached wafer as a material to be polished.
slurry feed rate: 150 ml/min
pressure of head: 400 g/cm$^2$
number of revolutions of platen: 50 rpm
number of revolutions of head: 80 rpm

For the polished material, the average of polishing rates was calculated in the same manner as in the above "evaluation of polishing of an insulation film using a water-based dispersion containing ceria as main polishing particles". The result is shown in Table 3.

(ii) Evaluation of Dishing

The above produced chemical mechanical polishing pad was attached to a chemical mechanical polishing instrument (model "EPO112", product of Ebara Corporation), and chemical mechanical polishing was conducted under the following conditions by use of a patterned 8-inch PETEOS-film wafer "SKW 7-2° (product of SKW Co. , Ltd., test wafer obtained by forming grooves of various line widths (depth: 0.8 μm) on a silicon wafer and depositing PETEOS to a thickness of 2.0 μm thereon; on the surface of PETEOS, grooves of widths and depth corresponding to those of the grooves formed on the silicon wafer are formed) as a material to be polished.

water-based dispersion for chemical mechanical
polishing: mixture of "CMS1101" (water-based dispersion for chemical mechanical polishing of JSR Corporation containing silica as polishing particles) and deionized water in a volume ratio of 1:2
slurry feed rate: 150 ml/min
pressure of head: 400 g/cm$^2$
number of revolutions of platen: 50 rpm
number of revolutions of head: 80 rpm

For the SKW 7-2 after 0.8 μm of the PETEOS film was removed by polishing under the above conditions, the hollow level of a portion corresponding to the center of the groove measured from a portion other than the grooves formed on the silicon wafer in a portion of line/space of 250 μm/250 μm was measured with Surface Profiler (product of KLA-Tencor Co., Ltd., model "P-10") and taken as dishing. The result is shown in Table 3.

Examples 2 to 17 and Comparative Examples 1 to 5

Compositions for chemical mechanical polishing pads were prepared in the same manner as in Example 1 except that the types and amounts of the components and the amount of dicumyl peroxide were changed as shown in Table 1, and curing torques thereof were measured. The results are shown in Table 1. Further, chemical mechanical polishing pads were produced in the same manner as in Example 1 by use of the compositions for chemical mechanical polishing pads and evaluated. The volume percentages of the water-soluble particles (E) in the whole pads are shown in Table 1, the states of water-insoluble portions are shown in Table 2, and the results of evaluations of chemical mechanical polishing performances are shown in Table 3.

Comparative Examples 6 and 7

Evaluations were made in the same manner as in Example 1 except that "IC1000" (Comparative Example 6) and "Politex" (Comparative Example 7) of Rohm and Haas Electronic Materials Co. , Ltd. were used as polishing pads. The states of water-insoluble portions are shown in Table 2, and the results of evaluations of chemical mechanical polishing performances are shown in Table 3.

Abbreviations in the columns showing the types of the components in Table 1 represent the following compounds.

Component (A)

GPPS: polystyrene (product of PS Japan, trade name "HF55")
AS: acrylonitrile-styrene copolymer (product of
Techno Polymer Co., Ltd., trade name "920FF", styrene content: 75 wt%)
HIPS: styrene-butadiene copolymer (product of PS Japan, trade name "AG102", styrene content: 75 wt%)
TR: styrene-butadiene copolymer (KRATON JSR
ELASTOMERS CO., LTD., trade name "TR2827", styrene
content: 24 wt%)
SEBS: styrene-(ethylene/butylene)-styrene block copolymer (product of Asahi Kasei Corporation, trade name "TAFTECH H1052", styrene content: 20 wt%)

Component (B)

RB: 1,2-polybutadiene (product of JSR Corporation, trade name "JSR RB830")

Component (D)

UMEX 1010: maleic anhydride modified polypropylene (product of Sanyo Chemical Industries, Ltd., acid value: 52 mg-KOH/g)
UMEX 1001: maleic anhydride modified polypropylene (product of Sanyo Chemical Industries, Ltd., acid

value: 26 mg-KOH/g)

"-" in the table indicates that the corresponding component was not used.

Dicumyl peroxide as the component (C) was added as "PERCUMYL D40" of NOF CORPORATION. The amounts shown in Table 1 are values in terms of pure product.

Table 1

| | Component (A) | | Component (B) | | Component (D) | |
|---|---|---|---|---|---|---|
| | Type | Amount (parts by weight) | Type | Amount (parts by weight) | Type | Amount (parts by weight) |
| Ex.1 | GPPS | 20 | RB | 70 | UMEX1010 | 10 |
| Ex.2 | GPPS | 30 | RB | 70 | UMEX1010 | - |
| Ex.3 | GPPS | 40 | RB | 50 | UMEX1010 | 10 |
| Ex.4 | GPPS | 50 | RB | 50 | UMEX1010 | - |
| Ex.5 | GPPS | 60 | RB | 30 | UMEX1010 | 10 |
| Ex.6 | GPPS | 30 | RB | 60 | UMEX1001 | 10 |
| Ex.7 | AS | 50 | RB | 40 | UMEX1010 | 10 |
| Ex.8 | HIPS | 30 | RB | 60 | UMEX1001 | 10 |
| Ex.9 | TR | 20 | RB | 80 | - | - |
| Ex.10 | GPPS | 40 | RB | 60 | - | - |
| Ex.11 | GPPS | 30 | RB | 70 | - | - |
| Ex.12 | GPPS | 30 | RB | 70 | - | - |
| Ex.13 | AS | 30 | RB | 70 | - | - |
| Ex.14 | HIPS | 30 | RB | 70 | - | - |
| Ex.15 | SBS | 20 | RB | 80 | - | - |
| Ex.16 | GPPS | 10 | RB | 90 | - | - |
| Ex.17 | GPPS | 15 | RB | 85 | - | - |
| C.Ex.1 | - | - | RB | 90 | UMEX1010 | 10 |
| C.Ex.2 | SEBS | 50 | - | - | UMEX1010 | 50 |
| C.Ex.3 | SEBS | 100 | - | - | - | - |
| C.Ex.4 | SEBS | 90 | - | - | UMEX1010 | 10 |
| C.Ex.5 | - | - | RB | 100 | - | - |

Ex.: Example, C.Ex.: Comparative Example

Table 1 (continued)

| | Water-Soluble Particles (E) | | | Amount of Dicumyl Peroxide | Torque of Composition |
|---|---|---|---|---|---|
| | Type | Amount (parts by weight) | Volume Percentage (%) | (parts by weight) | (N·m) |
| Ex.1 | β-cyclodextrin | 16.6 | 10 | 0.32 | 0.25 |
| Ex.2 | β-cyclodextrin | 7.8 | 5 | 0.28 | 0.19 |
| Ex.3 | - | - | - | 0.32 | 0.18 |
| Ex.4 | β-cyclodextrin | 7.6 | 5 | 0.32 | 0.15 |
| Ex.5 | β-cyclodextrin | 15.7 | 10 | 0.24 | 0.11 |
| Ex.6 | β-cyclodextrin | 16.3 | 10 | 0.32 | 0.22 |
| Ex.7 | β-cyclodextrin | 15.7 | 10 | 0.32 | 0.16 |
| Ex.8 | β-cyclodextrin | 16.3 | 10 | 0.32 | 0.20 |
| Ex.9 | β-cyclodextrin | 38.2 | 20 | 0.32 | 0.60 |
| Ex.10 | β-cyclodextrin | 16.8 | 10 | 0.12 | 0.11 |
| Ex.11 | - | - | - | 0.16 | 0.13 |
| Ex.12 | β-cyclodextrin | 27.0 | 15 | 0.16 | 0.29 |
| Ex.13 | β-cyclodextrin | 16.9 | 10 | 0.20 | 0.28 |
| Ex.14 | β-cyclodextrin | 16.9 | 10 | 0.20 | 0.26 |
| Ex.15 | β-cyclodextrin | 38.2 | 20 | 0.20 | 0.35 |
| Ex.16 | β-cyclodextrin | 17.0 | 10 | 0.48 | 1.13 |
| Ex.17 | β-cyclodextrin | 17.0 | 10 | 0.48 | 1.20 |
| C.Ex.1 | β-cyclodextrin | 18.7 | 10 | 0.40 | 0.39 |
| C.Ex.2 | β-cyclodextrin | 18.1 | 10 | 0.24 | 0.40 |
| C.Ex.3 | β-cyclodextrin | 17.5 | 10 | 0.40 | 0.50 |
| C.Ex.4 | β-cyclodextrin | 17.4 | 10 | 0.40 | 0.47 |
| C.Ex.5 | β-cyclodextrin | 8.1 | 5 | 0.60 | 1.42 |

Ex.: Example, C.Ex.: Comparative Example

Table 2

| | State of Water-Insoluble Portion | Origin of Constituent of Continuous Phase | Domain (1) | | Domain (2) | |
|---|---|---|---|---|---|---|
| | | | Origin of Constituent | Average Domain Size (μm) | Origin of Constituent | Average Domain Size (μm) |
| Ex.1 | Sea-Island Structure | RB | GPPS | 0.9 | UMEX1010 | 0.3 |
| Ex.2 | Sea-Island Structure | RB | GPPS | 2 | - | - |
| Ex.3 | Sea-Island Structure | RB | GPPS | 6 | UMEX1010 | 0.4 |
| Ex.4 | Sea-Island Structure | RB | GPPS | 15 | - | - |
| Ex.5 | Sea-Island Structure | GPPS | RB | 10 | UMEX1010 | 0.5 |
| Ex.6 | Sea-Island Structure | RB | GPPS | 2 | UMEX1001 | 0.3 |
| Ex.7 | Sea-Island Structure | RB | AS | 22 | UMEX1010 | 0.3 |
| Ex.8 | Sea-Island Structure | RB | HIPS | 2 | UMEX1001 | 0.3 |
| Ex.9 | Sea-Island Structure | RB | TR | 0.3 | - | - |
| Ex.10 | Sea-Island Structure | RB | GPPS | 6.0 | - | - |
| Ex.11 | Sea-Island Structure | RB | GPPS | 3.0 | - | - |
| Ex.12 | Sea-Island Structure | RB | GPPS | 2.0 | - | - |
| Ex.13 | Sea-Island Structure | RB | AS | 5.0 | - | - |
| Ex.14 | Sea-Island Structure | RB | HIPS | 2.0 | - | - |
| Ex.15 | Sea-Island Structure | RB | SBS | 0.3 | - | - |
| Ex.16 | Sea-Island Structure | RB | GPPS | 0.5 | - | - |
| Ex.17 | Sea-Island Structure | RB | GPPS | 2.0 | - | - |
| C.Ex.1 | Sea-Island Structure | RB | UMEX1010 | 0.3 | - | - |
| C.Ex.2 | Sea-Island Structure | RB | SEBS | 38 | - | - |
| C.Ex.3 | Uniform Phase | - | - | - | - | - |
| C.Ex.4 | Sea-Island Structure | SEBS | UMEX1010 | 0.4 | - | - |
| C.Ex.5 | Continuous Phase | - | - | - | - | - |
| C.Ex.6 | Foam | - | - | - | - | - |
| C.Ex.7 | Foam | - | - | - | - | - |

Ex.: Example, C.Ex.: Comparative Example

Table 3

| | Contain Ceria as Main Polishing Particles | | | Contain Silica as Main Polishing Particles | |
|---|---|---|---|---|---|
| | Polishing Using Water-Based Dispersion | | | Polishing Using Water-Based Dispersion | |
| | Polishing Rate (Å/min) | In-Plane Uniformity (%) | Useful Life of Pad (number) | Polishing Rate (Å/min) | Dishing (Å) |
| Ex.1 | 3800 | 2 | 1200 | 1800 | 350 |
| Ex.2 | 4200 | 4 | 1500 | 1700 | 450 |
| Ex.3 | 4800 | 1 | 1100 | 1700 | 600 |
| Ex.4 | 4900 | 3 | 1000 | 1500 | 750 |
| Ex.5 | 4700 | 4 | 1200 | 1500 | 600 |
| Ex.6 | 4900 | 3 | 1300 | 1800 | 300 |
| Ex.7 | 4100 | 2 | 1500 | 1600 | 850 |
| Ex.8 | 3200 | 5 | 1300 | 1800 | 500 |
| Ex.9 | 3500 | 5 | 1200 | 1900 | 500 |
| Ex.10 | 4700 | 14 | 1200 | 1800 | 700 |
| Ex.11 | 4000 | 13 | 1500 | 1800 | 600 |
| Ex.12 | 4100 | 11 | 1100 | 1700 | 500 |
| Ex.13 | 4200 | 14 | 1200 | 1800 | 650 |
| Ex.14 | 3900 | 7 | 1200 | 1700 | 700 |
| Ex.15 | 4000 | 12 | 1100 | 1900 | 450 |
| Ex.16 | 2200 | 21 | 1000 | 1800 | 500 |
| Ex.17 | 1900 | 20 | 1100 | 1700 | 600 |
| C.Ex.1 | 1500 | 4 | 1000 | 1900 | 300 |
| C.Ex.2 | 2800 | 10 | 800 | 1500 | 1300 |
| C.Ex.3 | 2000 | 20 | 500 | 1100 | 650 |
| C.Ex.4 | 1700 | 15 | 400 | 1300 | 700 |
| C.Ex.5 | 2100 | 23 | 700 | 1200 | 600 |
| C.Ex.6 | 2000 | 5 | 1000 | 1400 | 1200 |
| C.Ex.7 | 2500 | 15 | 300 | 1600 | 1500 |

Ex.: Example, C.Ex.: Comparative Example

## Claims

1. A chemical mechanical polishing pad comprising a water-insoluble matrix which comprises (A) a styrene polymer and (B) a diene polymer, wherein one of the components (A) and (B) is dispersed in the other component to form a sea-island structure of the water-insoluble matrix,
**characterized in that**

the average size of the domain forming the islands ranges from 0.2 to 30 μm.

2. The pad of claim 1, wherein the water-insoluble matrix further comprises (D) a polymer having an acid anhydride group.

3. The pad of claim 1, wherein the water-insoluble matrix also has a water-soluble material (E) dispersed therein in a granular form.

4. A chemical mechanical polishing process comprising polishing a surface to be polished of an object to be polished by the chemical mechanical polishing pad of claim 1.

5. The process of claim 4, wherein the object to be polished is an insulation film.

## Patentansprüche

1. Kissen für chemisch mechanisches Polieren, umfassend eine wasserunlösliche Matrix, die (A) ein Styrol-Polymer und (B) ein Dien-Polymer umfasst, wobei einer der Bestandteile (A) und (B) in dem anderen Bestandteil dispergiert ist, um eine See-Insel-Struktur der wasserunlöslichen Matrix zu bilden,
**dadurch gekennzeichnet, dass**
die durchschnittliche Größe der Domäne, die die Inseln bildet, von 0,2 bis 30 μm ist.

2. Kissen nach Anspruch 1, wobei die wasserunlösliche Matrix weiter (D) ein Polymer mit einer Säureanhydridgruppe aufweist.

3. Kissen nach Anspruch 1, wobei die wasserunlösliche Matrix auch ein wasserlösliches Material (E), das darin in einer körnigen Form dispergiert ist, aufweist.

4. Chemisch-mechanisches Polierverfahren, umfassend ein Polieren einer zu polierenden Oberfläche eines zu polierenden Gegenstands durch das Kissen für chemisch mechanisches Polieren von Anspruch 1.

5. Verfahren nach Anspruch 4, wobei der zu polierende Gegenstand ein Isolierfilm ist.

## Revendications

1. Tampon de polissage chimico-mécanique comprenant une matrice insoluble dans l'eau qui comprend (A) un polymère de styrène et (B) un polymère diénique, dans lequel l'un des composants (A) et (B) est dispersé dans l'autre composant pour former une structure de type mer-îlot de la matrice insoluble dans l'eau,
**caractérisé en ce que**
la taille moyenne du domaine formant les îlots se trouve dans la gamme de 0,2 à 30 μm.

2. Tampon de la revendication 1, dans lequel la matrice insoluble dans l'eau comprend en plus (D) un polymère ayant un groupe d'anhydrides d'acide.

3. Tampon de la revendication 1, dans lequel la matrice insoluble dans l'eau a également un matériau soluble dans l'eau (E) qui y est dispersé sous forme granulaire.

4. Processus de polissage chimico-mécanique comprenant le polissage d'une surface à polir d'un objet à polir par le tampon de polissage chimico-mécanique de la revendication 1.

5. Processus de la revendication 4, dans lequel l'objet à polir est un film isolant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11070463 A
- JP 8216029 A
- JP 8039423 A
- JP 8500622 A
- JP 2000034416 A
- JP 2000033552 A
- JP 2001334455 A
- JP 2003209076 A
- JP 2002190458 A
- EP 1295680 A
- EP 1470893 A
- EP 1252973 A
- EP 1164559 A
- US 6234875 B